# EUROPEAN PATENT APPLICATION

(11) **EP 0 982 941 A1**
(43) Date of publication of application: **01.03.2000**
(21) Application number: 99202622.9
(22) Date of filing: 11.08.1999
(51) Int. Cl.: H04N 5/63, H04B 1/16

(54) **Remote controllable switch**

(30) Priority: 28.08.1998 NL 1009965
(71) Applicant: Bol Brothers Car Innovations Company, 2661 CN Bergschenhoek (NL)
(72) Inventor: Bol, Frederikus Gerardus Maria, 2661 CN Bergschenhoek (NL)
(74) Representative: van der Arend, Adrianus G.A., Ir.

(57) **Abstract**

To preclude the risk of fire in television sets (21) in standby mode, a remote-control mains switch (1) can be used. In order both to switch the mains voltage back on again and leave standby mode with just one remote control (10), the remote-control mains switch (1) according to the invention is characterized by programmable receiving means (8) and transmitting means (9) for emitting a second control signal (B) in response to receiving a first control signal (A).

## Description

The invention relates to a switching device, comprising switching means for switching a set of conductors and receiving means for receiving, without the use of wires, control signals from a control device, the receiving means being linked to the switching means. A switching device of this type is known in practice. The known switching devices are usually provided with a remote control which transmits control signals by means of infrared light.

Switching devices of this type are used for switching electrical equipment on and off at a distance. Possible applications are lighting such as external lighting, but also computers, washing machines and electrical appliances. The switching devices serve not only for greater ease of use, but also as a safety measure. After all, a remote-control switch allows an electrical appliance to be switched off without the appliance being touched or even having to be approached closely. Particularly in the event of short circuits and fire hazard in an electrical appliance, a remote-control switch may provide the answer.

One type of electrical equipment which produces an unexpectedly high fire risk is the television set. Modern television sets are often equipped with a standby mode, in which the set is only partially switched on. Even in said standby mode, activated sections of the set produce heat, which often cannot readily escape, owing to the presence of dust. This may cause scorching of the material and ultimately a fire may occur.

Of course it is possible for a television set to be switched on and off by means of a remote-control switch. If, however, the television set has been put on standby mode with the aid of its own remote control and has subsequently been fully switched off by means of a remote-control switch, it is not possible for it to be fully switched on using only the remote control of the switch. Exiting standby mode again requires the television set's own remote control, which is inconvenient and hinders the use of the remote-control switch as a safety measure.

It is an object of the invention to overcome this problem by providing a remote-control switching device of the type mentioned in the preamble, which is characterized by programmable transmitting means for emitting a second control signal in response to receiving a first control signal.

As a result of a second control signal being emitted in response to the first control signal which has been received from a control device located at a distance, it is possible for the set connected to the switching device first to be switched on and then, under the influence of the second control signal, to be brought out of standby mode and to be switched on fully. Designing the transmitting means to be programmable allows the second control signal to be tailored to the set to be controlled. Thus a single remote-control device can be used for switching on fully a television set protected by a remote-control switch, even if the set was in standby mode before being switched off.

In many television sets, the receiver will, immediately after switching on, be ready to receive remote-control signals and be able to receive the abovementioned second control signal. To allow the switching device according to the invention to be used even with television sets whose receiver is not immediately ready, the switching device according to the invention is advantageously characterized by control means which are designed for delaying the emission of the second control signal. A suitable choice of the delay (for example 0.5 - 1.0 sec) ensures that the receiver is ready for control signals of the television set in order to receive the second control signal and fully activate the television set.

It is of course possible for the transmission of the second control signal to the television set to be impeded by contingent circumstances, for example by somebody walking through the room in question and crossing the path of the second control signal. Fully switching on a television set can still be effected in such cases by transmitting means which are designed for repeated emission of the second control signal. Emitting the second control signal a number of times (for example from 3 to 5 times) at intervals (of, for example, 0.2 - 1.0 sec) limits or even entirely precludes the effect of temporary disruptions.

Advantageously, the switching device according to the invention is characterized by current detection means for detecting the current intensity through the conductors, the transmission means being designed for repeated emission of the second control signal as a function of the current intensity detected. With the aid of current detection means, the switching device is able to determine whether the television set has been fully switched on (normal current intensity) or is in standby mode (reduced current intensity). The emission of the second control signal can therefore be repeated until the normal current intensity is detected.

Preferably, the switching means according to the invention is characterized by programmable receiving means in order to choose the first control signal to be identical to the second control signal. This allows the receiving means to be tailored to the remote-control device of the television set, so that both the switching device and the television set can be operated using just one remote-control device. As a result, a separate remote control device for the switching device can be dispensed with, which has the effect of lowering costs. Moreover, most households already have a number of remote controls (for television, video equipment, audio installations, lighting, etc.), so that an additional remote control is undesirable as a rule. Dispensing with the remote control device of the switching device therefore considerably increases the ease of use.

The invention will be explained below in more detail with reference to the figures.
Figure 1 schematically shows a television set connected to a switching device according to the invention.
Figure 2 schematically shows the construction of a switching device according to the invention.
Figure 3 gives a perspective view of an embodiment of a switching device according to the invention.

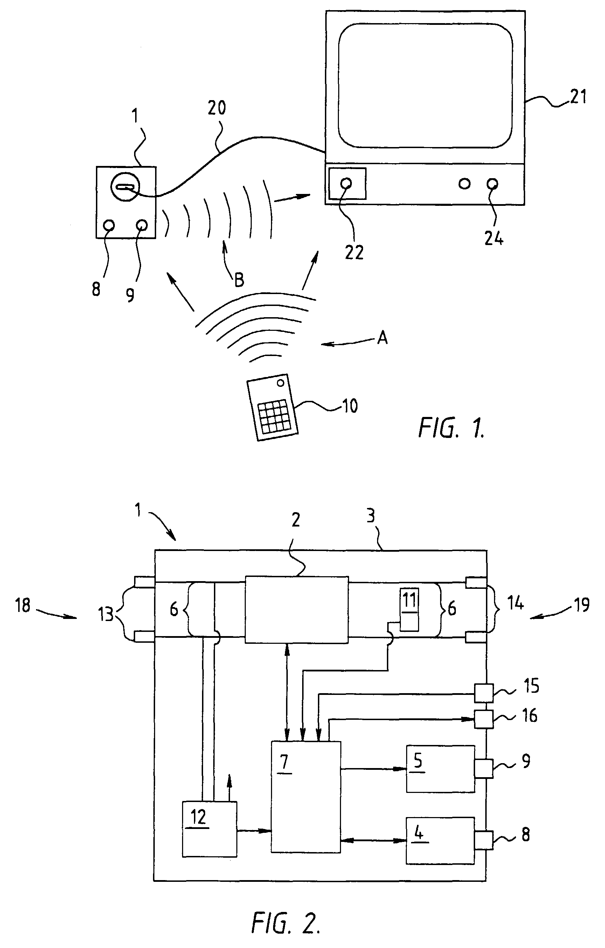

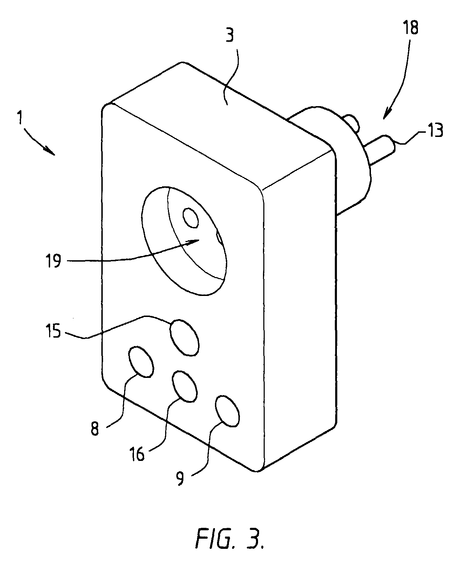

Figure 1 shows a television set 21 which, with the aid of a mains flex 20, is connected to a switching device 1 according to the invention. The switching device 1, as will subsequently be explained in more detail with reference to Figure 3, is preferably provided with a housing with a plug connector on one side and a mating connector on the other side. Thus, the switching device 1 can be plugged into a wall socket (not shown), whereupon the plug connector of the mains flex 20 can be plugged into the mating connector of the device 1.

The device 1 is provided with a photodetector 8 and a light source 9 which are preferably suitable for detecting and emitting, respectively, infrared light. The television 21 is provided with a receiver 22 for receiving (infrared) control signals, coming from a remote control 10 supplied with the television. By means of a remote control 10 of this type it is possible to put an activated television set in standby mode and to reactivate a television set which is in standby mode, i.e. to switch it fully back on. Using the control key 24, the television set can be switched off completely. It is not possible, however, for a completely switched-off television set to be activated with the aid of the remote control 10, since with a television set which has been completely switched off, the receiver 22 has likewise been switched off. Many television viewers will therefore, for the sake of convenience, not switch off their television set completely but leave it in standby mode, so that the television set can at all times be switched on with the aid of the remote control 10. As has been mentioned in the above, a television set which is on standby over prolonged periods, can present a fire hazard, however. It is the object of the invention to overcome this problem as will be explained hereinafter.

The switching device 1 according to the invention is of such design that the photodetector 8 is able to receive the (first) control signal A from the remote control 10. If said first control signal A is an activation signal, i.e. a signal which causes the television set to be switched on fully, the switching device 1 will switch on the current feed to the television 21. Moreover, the switching device 1, with the aid of the light source 9, will emit a second control signal B which is preferably identical to the first control signal A. As a result of the current feed to the television set 21 being switched on, the receiver 22 will be activated so that it is able to receive the second control signal B. It will be obvious that the receiver 22 was unable to receive the first control signal A, since the receiver 22 had not been switched on when the signal was being emitted.

It is not necessary for the second control signal B emitted by the light source 9 to be able to reach the receiver 22 directly. In practice it was found that the second control signal B can quite easily be transmitted by means of reflections from floor, ceiling and walls.

If the first control signal A is a deactivation signal, both the receiver 22 of television set 21 and the switching device 1 will respond thereto, so that the television is put in standby mode and also, by switching device 1, is switched off completely.

It is thus possible, by intervention of the switching device 1 according to the invention, to use the remote control 10 for switching off the television set 21 completely and subsequently to switch it fully back on.

The construction of the switching device according to the invention will be explained in more detail with reference to an example depicted in Figure 2. The switching device 1 shown comprises a housing which accommodates a switch 2. The switch 2 makes or breaks the connection between a set of conductors 6 which extend between contacts 13 of a plug connector (mains side) 18 and contacts 14 of a mating connector (appliance side) 19.

On the mains side 18, a feed 12 is connected to the conductors 6. The switching device 1 further comprises a receiver 4 which is connected to a photodetector (photodiode) 8 and a transmitter 5 which is connected to a light source (LED) 9. The transmitter 5 and the receiver 4, like the switch 2, are connected to a controller 7, which can be, for example, an integrated circuit. Also connected to the controller are a control key 15 and a status indicator 16. The status indicator is formed, for example, by a so-called three-colour LED.

Optionally fitted on the appliance side 19 of the switch 2 is a current detector 11 which is linked to conductor 6 and is likewise connected to the controller 7.

The receiver 4 and the transmitter 5 are preferably of programmable design. To this end, the controller 7, influenced by the control key 15 having been depressed, can activate a programming mode for the receiver 4 and the transmitter 5. There are preferably two programming modes: one for switching off (deactivation) and one for switching on (activation). If in a programming mode the receiver 4, via the photodetector 8, receives a control signal, said receiver 4 will tune itself, in terms of frequency and control code, to the control signal. Furthermore, the receiver 4 and the controller 7 tune the transmitter 5 in such a way that the latter, where necessary, is able to reproduce the control signal received.

If the receiver 4 then, in normal operating mode, receives a control signal which is recognized as a deactivation signal (i.e. has been received by the receiver 4 in the first programming mode), the receiver 4 will output, to the controller 7, a signal under the influence of which the switch 2 will break the connection of the conductors 6. If, however, a control signal is received which is recognized as an activation signal, the controller 7 will drive the switch 2 so as to re-establish the connection between the conductors 6. At the same time, the controller 7 will output, to the transmitter 5, a signal which will cause said transmitter 5, via the light source 9, to reproduce the activation signal. Using this reproduced (second) control signal, the television set will now be activated.

Advantageously, the transmitter 5 is driven with a small delay, to ensure that the receiver (22 in Figure 1) is capable of receiving the second control signal. Alternatively, the transmitter 5 can be activated only as a function of a signal coming from the current detector 11. In other words, the current detector 11 is able to determine whether the current through the conductors corresponds to standby mode of the connected set. In this context it is possible for the transmitter to be activated only if the set is in standby mode, or possibly again if the set is found to be still in standby mode.

Figure 3 shows a specific embodiment of the switching device 1 according to the invention. The housing 3 here is of a closed design to prevent the ingress of dust. Furthermore, the housing 3 is compact and on one side has a plug connector section 18 which can be plugged into a wall socket. Another side includes a mating connector 19 for connecting a mains flex of an appliance to be switched. Fitted on the front of the housing 3 are the photo detector 8 and the light source 9, likewise the control key 15 and the status indicator 16. This status indicator 16, which is preferably formed by a three-colour LED may indicate, for example by means of the colour red, that the connected set is not live, by means of the colour green, that the connected set is indeed live, or vice versa. Blinking of the status indicator device may indicate that the device 1 is in programming mode.

It will be obvious that instead of using infrared light for transmitting the control signals it is also possible to use radio waves, ultrasound and the like.

Although the invention has been described throughout hereinabove with reference to the example of a television set, the switching device according to the invention can also be used for many other types of appliances, such as video equipment and the like. It will be obvious to those skilled in the art that many modifications and additions are possible without moving beyond the scope of the invention.

## Claims

1. Switching device (1), comprising switching means (2) for switching a set of conductors (6) and receiving means (4, 8) for receiving, without the use of wires, control signals from a control device (10), the receiving means (4) being linked to the switching means (2), **characterized by** programmable transmitting means (5, 9) for emitting a second control signal (B) in response to receiving a first control signal (A).

2. Switching device according to claim 1, **characterized by** control means (7) which are designed for delaying the emission of the second control signal (B).

3. Switching device according to claim 1 or 2, **characterized by** control means (7) which are designed for repeated emission of the second control signal (B).

4. Switching device according to claim 3, **characterized by** current detection means (11) for detecting the current intensity through the conductors (6), the control means (7) being designed for delayed or repeated emission of the second control signal (B) as a function of the current intensity detected.

5. Switching means according to any one of the preceding claims, **characterized by** programmable receiving means (4) in order to choose the first control signal (A) to be identical to the second control signal (B).

6. Switching device according to any one of the preceding claims, **characterized by** a housing (3) which is provided with a plug connector (19) and which incorporates a mating connector (18).

7. Switching device according to any one of the preceding claims, **characterized by** a control key (15) for manual operation of the device.
